# EUROPÄISCHE PATENTSCHRIFT

(11) **EP 2 516 949 B1**
(45) Veröffentlichungstag und Bekanntmachung des Hinweises auf die Patenterteilung: **21.09.2016**
(21) Anmeldenummer: 10810735.0
(22) Anmeldetag: 15.12.2010
(51) Int. Cl.: F26B 15/12, F26B 21/02

(54) **VERFAHREN UND VORRICHTUNG ZUM TROCKNEN VON GIPSPLATTEN**
METHOD AND DEVICE FOR DRYING SHEETS OF DRYWALL
PROCÉDÉ ET DISPOSITIF DE SÉCHAGE DE PLAQUES DE PLÂTRE

(30) Priorität: 21.12.2009 DE 102009059822
(43) Veröffentlichungstag der Anmeldung: 31.10.2012
(73) Patentinhaber: Grenzebach BSH GmbH, 36251 Bad Hersfeld (DE)
(72) Erfinder: STRAETMANS, Christoph, 36251 Bad Hersfeld (DE); LANG, Karl, Friedrich, 36251 Bad Hersfeld (DE)
(74) Vertreter: Kindermann, Peter
(86) Internationale Anmeldenummer: PCT/DE2010/001477
(87) Internationale Veröffentlichungsnummer: WO 2011/076180

(56) Entgegenhaltungen:
- DE-A1- 1 946 696
- DE-A1- 2 613 512
- DE-C- 509 362
- DE-C1- 4 326 877
- DE-U1-202009 017 286
- US-A- 4 490 924

## Beschreibung

Die Erfindung betrifft ein Verfahren und eine Vorrichtung zum Trocknen von plattenartigen Materialien, insbesondere Gipskartonplatten.

Das Trocknen solcher plattenartiger Materialien erfolgt in den meisten Fälle durch einen überwiegend konvektiven Wärmeübergang in der Form des Überströmens von erwärmter Luft. Die Platten werden dabei, oft auch über mehrere Etagen verteilt, mit Hilfe von Fördereinrichtungen wie Rollenbahnen oder Siebbänder durch den Trockner geführt.

Nach dem Stand der Technik werden Trocknungsanlagen meist im Umluftbetrieb betrieben. Die Trocknungsluft wird hierbei mehrfach an die Platten herangeführt und nach jedem Kontakt erneut erwärmt. Die Luft reichert sich auf diese Weise zunehmend mit Feuchtigkeit an, nur ein kleiner Teil der Trocknungsluft wird an die Umgebung als Abluft abgegeben um Feuchtigkeit und Rauchgase in die Umgebung abzuführen.

Ein Unterscheidungsmerkmal verschiedener Trocknerbauarten bildet die Art der Luftführung über dem Trocknungsgut. Die Luft kann im Wesentlichen in der Form einer Querbelüftung, einer Längsbelüftung, oder einer so genannten Prallstrahlbelüftung an die Platte geführt werden.

Bei der Querbelüftung wird die Trocknungsluft von der Seite, quer zur Förderrichtung des plattenartigen Materials, über das Trocknungsgut geführt. Da sich die Trocknungsluft bei ihrem Weg über das Trocknungsgut zunehmend abkühlt, ergeben sich dadurch über die Breite unterschiedliche Trocknungsgeschwindigkeiten. Deshalb wird dieses Verfahren bei empfindlichen Materialien wie Gipskartonplatten nicht angewendet.

Bei der Längsbelüftung wandert die Trocknungsluft über einen langen Weg entlang der Längsachse des Trockners, überströmt dabei die Platte, trocknet diese und kühlt dadurch stark ab. Die Trocknungsluft kann somit bei niedrigen Temperaturen, energetisch besonders günstig nahe des Taupunkts der Trocknungsluft, abgeführt werden. Zur Erwärmung von Frischluft mit Hilfe eines Wärmetauschers kann dann gezielt Kondensationswärme genutzt werden.

Bei der Prallstrahlbelüftung wird die Trocknungsluft von der Seite der Trocknungsanlage in Luftleitungen, so genannten Düsenkästen, herangeführt und über Luftaustritts-Düsen senkrecht auf die Oberfläche des Trocknungsguts geblasen. Von dort strömt diese Luft zur gegenüber liegenden Seite der Trocknungsanlage.
Nach ähnlichem Aufbau arbeitende Trockner sind mittlerweile weltweit verbreitet. Zu ihren Vorzügen zählen, dass durch den Aufbau aus vielen, relativ kurzen Trocknungskammern, welche jeweils einzeln belüftet und beheizt werden können, die gewünschte Trocknungstemperatur und das Klima über die Länge des Trockners frei gewählt werden können. Somit können die Trocknungsbedingungen an die Bedürfnisse des Trocknungsguts angepasst werden. Der Trockner ist zudem, z.B. bei Produktwechseln, ausgezeichnet regelbar.

Durch den guten Wärmeübergang bei der Prallstrahlanströmung können solche Trockner deutlich kürzer gebaut werden als vergleichbare mit Längsbelüftung überströmte Trockner.
Durch Verstellen der Düsenkastenneigung kann zudem eine sehr gleichmäßige Trocknung über die Breite des Trocknungsgutes erzielt werden.

Die Abluft jeder Kammer wird einzeln abgeleitet und gesammelt. Da hierunter auch Kammern mit verfahrensbedingt hohen Trocknungstemperaturen gehören, ergibt sich eine insgesamt hohe Ablufttemperatur. Auch unter Verwendung eines Wärmetauschers kann die in der Abluftfeuchte enthaltene Kondensationswärme kaum sinnvoll genutzt werden kann.

Eine solche Anlage ist in der DE 19 46 696 A1 unter dem Titel eines Verfahrens und einer Einrichtung für beschleunigte Trocknung von Gipsplatten beschrieben. Die Druckschrift befasst sich mit der Beschreibung einer Trocknerkammer, welche so gestaltet wird, dass ein möglichst hoher Wärmeeintrag und eine möglichst gleichmäßige Trocknung über die Breite des Trocknungsgutes gewährleistet ist. Maßnahmen zur Senkung des Energieverbrauchs werden jedoch nicht erwähnt. DE 19 46 696 A1 offenbart ein Verfahren und eine Vorrichtung zum Trocknen von Platten, die in Etagen durch eine in Trocknungskammern aufgeteilte Vorrichtung geführt werden, bei dem die Platten in einer Haupttrocknungsstufe und einer Endtrocknungsstufe mittels Prallstrahlbelüftung mit der Trocknungsluft in Kontakt gebracht werden und wobei die Prallstrahlbelüftung mittels querbelüfteter Düsenkästen gewährleistet wird, wobei in der Haupttrocknungsstufe Umluft auf 150 bis 550 °C erwärmt wird, und ein Teil der Umluft kammerweise entnommen, gesammelt und als Abluft abgeführt wird.

Aus der DE 26 13 512 A1 ist ein zweistufiges Trocknungsverfahren und eine Trocknungsanlage bekannt, wobei ein an sich bekanntes zweistufiges Trocknungsverfahren so abgeändert bzw. ergänzt werden soll, dass insbesondere Gipsplatten oder Güter mit ähnlichen Eigenschafen nach diesem Verfahren wirtschaftlich getrocknet werden können.

Bei dem zweistufigen Trocknungsverfahren wird die zweite Trocknungsstufe unter Zwischenschaltung eines Wärmetauschers aus der Abluft der ersten Trocknerstufe beheizt. Die Platten sollen in der ersten Trocknerstufe mit hoher Temperatur und hoher Luftfeuchte und in der zweiten Trocknerstufe mit relativ niedriger Temperatur und niedriger Luftfeuchte getrocknet werden. Die erste Stufe ist hierbei längsbelüftet, die zweite Stufe querbelüftet. Die Prallstrahlbelüftung wird nicht angewendet. Zwar lässt sich mit dieser Bauart ein sehr niedriger Verbrauch realisieren. Aufgrund der indirekten Beheizung der zweiten Stufe ist das Temperaturniveau jedoch sehr niedrig.

Entsprechend ergeben sich eine geringe Trocknerleistung und ein hohem Verbrauch an Förderleistung. Der Trockner hat sich daher in der Praxis nicht durchsetzen können.

Weiterhin ist aus der DE 43 26 877 C1 ein Verfahren zum Trocknen von Platten und ein entsprechender Trockner bekannt. Ausgehend von dem Verfahren nach DE 26 13 512 A1 wird ein Verfahren mit möglichst geringem Primär- und Sekundärenergieverbrauch dargestellt. Insbesondere soll die eingesetzte Primärenergie durch Nutzen der Abwärme und auch der Kondensationswärme der Abluft möglichst gering gehalten werden, ohne den Bedarf an Sekundärenergie durch Umwälzen großer Luftmassenströme zu erhöhen. Hierzu wird in der Stufe B die Abluft der Stufe A durch einen in den Etagen des Trockners angeordneten Wärmetauscher geleitet und die Trocknungsluft mit niedriger Temperatur und niedriger Luftfeuchte im Gegenstrom zur Abluft der Stufe A geführt. Die für die Abkühlung der Abluft verantwortliche Stufe B weist hier jedoch keine Prallstrahlbelüftung auf und durch die indirekte Beheizung ist die Trocknungsleistung der Stufe B recht niedrig.

Die Druckschrift DE 509 362 C beschreibt ein Verfahren und eine Vorrichtung zum Trocknen von Textilien.

In der Druckschrift US 4 490 924 A sind ein Verfahren und eine Vorrichtung zum Trocknen von Material beschrieben.

Der vorliegenden Erfindung liegt deshalb die Aufgabe zugrunde, eine Vorrichtung und ein Verfahren bereitzustellen, mit dem plattenförmige Materialien mit möglichst geringem Aufwand an Energie mittels Prallstrahlbelüftung schonend getrocknet werden können. Es wird angestrebt, bestehende Anlagen möglichst kostengünstig im Sinne der Erfindung verändern zu können.

Diese Aufgabe wird mit einem Verfahren nach Anspruch 1, bzw. einer Vorrichtung nach Anspruch 3 gelöst.

Weitere vorteilhafte Ausgestaltungen der Erfindung ergeben sich aus den Unteransprüchen.

Die erfindungsgemäße Vorrichtung wird im Folgenden näher beschrieben.

Es zeigen dabei im Einzelnen:
- Fig. 1:: einen Schnitt durch eine erfindungsgemäße Trocknungskammer
- Fig. 2:: ein beispielhaftes Funktionsschema eines gattungsgemäßen konventionellen Trockners
- Fig. 3:: ein Funktionsschema des erfindungsgemäßen Trockners
- Fig. 4:: eine Prinzipskizze in der Draufsicht zur Luftführung in dem erfindungsgemäßen Trockner
- Fig. 5:: beispielhaft ein Funktionsschema einer vorteilhaften Abwandlung des erfindungsgemäßen Trockners
- Fig. 6:: beispielhaft ein Funktionsschema einer weiteren vorteilhaften Abwandlung des erfindungsgemäßen Trockners
- Fig. 7:: Detail -Darstellung der Wandklappen

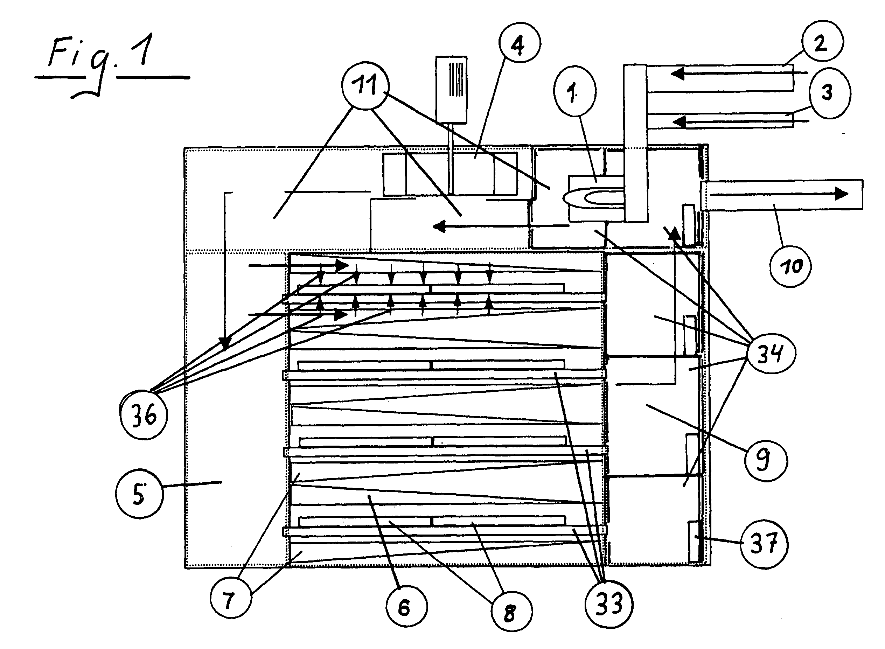

Fig. 1 zeigt einen Schnitt durch eine erfindungsgemäße Trocknungskammer. Die Pfeile bezeichnen die Strömungsrichtung der Trocknungsluft.

Vorgewärmte Frischluft wird dem Brenner 1 als Verbrennungsluft 2 und Mischluft 3 zugeführt. Es werden Gas und Öl als Brennstoffe verwendet. An dieser Stelle kommen an Stelle der Brenner auch dampf- oder thermoölbeheizte Heizregister zum Einsatz. Die Luft wird dann indirekt erwärmt.

Die Weiterleitung der durch den Brenner 1 erhitzten Luft in den Druckraum 5 erfolgt über den Umluftventilator 4. Der Druckraum 5 dient der gleichmäßigen Verteilung der Luft in die einzelnen Etagen der Trocknungsraumes 6. Die Luft wird dabei zunächst in sogenannte Düsenkästen 7 gedrückt, von welchen sie über Lochdüsen 36, die der Übersichtlichkeit wegen nur in der oberen Trocknungsebene des Trockenraums 6 dargestellt sind, welche an der Ober- bzw. Unterseite der Düsenkasten angeordnet sind, senkrecht auf die Platten 8 geblasen wird. Die Platten 8 werden mit einer Transporteinrichtung 33 senkrecht zur Betrachtungsebene gefördert.

Um eine gleichmäßige Verteilung der Luft über die Breite zu gewährleisten, werden die Düsenkästen konisch zulaufend ausgeführt. Ober und unterhalb der Platten 8 strömt die Luft dann in den Saugraum 9. Ein Teil der Luft, welcher in der Summe im wesendlichen den Verbrennungsgasen, der Frischluft, sowie dem durch die Trocknung erzeugten Wasserdampf entspricht, entweicht über die Abluftableitung 10. Am Brenner 1 schließt sich der Umluftkreis. Der Bereich oberhalb von Druckraum 5 und Saugraum 9, sowie vom Trocknungsraum 6 wird auch als Overhead 11 bezeichnet. Bei normalen Trocknungskammern werden benachbarte Trocknungskammern im Druck- und Saugraum, sowie im Overhead 11 durch geschlossene Begrenzungswände abgegrenzt, in der Fig.1 ist zu erkennen, dass die erfindungsgemäße Trocknungskammer43 von der nächsten Kammer über ein oder mehrere Wandklappen 34 Im Saugraum 9 getrennt ist. Hier beispielhaft fünf Klappen dargestellt.Diesen Wandklappen 34 ist jeweils eine Wandklappensteuerung 37 zugeordnet um die Luftzufuhr in die nächste Kammer bzw. in den nächsten Trocknerbereich gezielt zu steuern.
Da durch das Umluftventilator 4 in jeder Trocknungskammer ein im Wesentlichen kreisförmig verlaufender Luftstrom entsteht und ein Teil des Luftstroms über die Wandklappen 34 in die, einer bestimmten Trocknungskammer folgende, nächste Trocknungskammer gelangt, entsteht zusätzlich eine Luftströmung in der Längsrichtung des Endtrockenbereichs 21

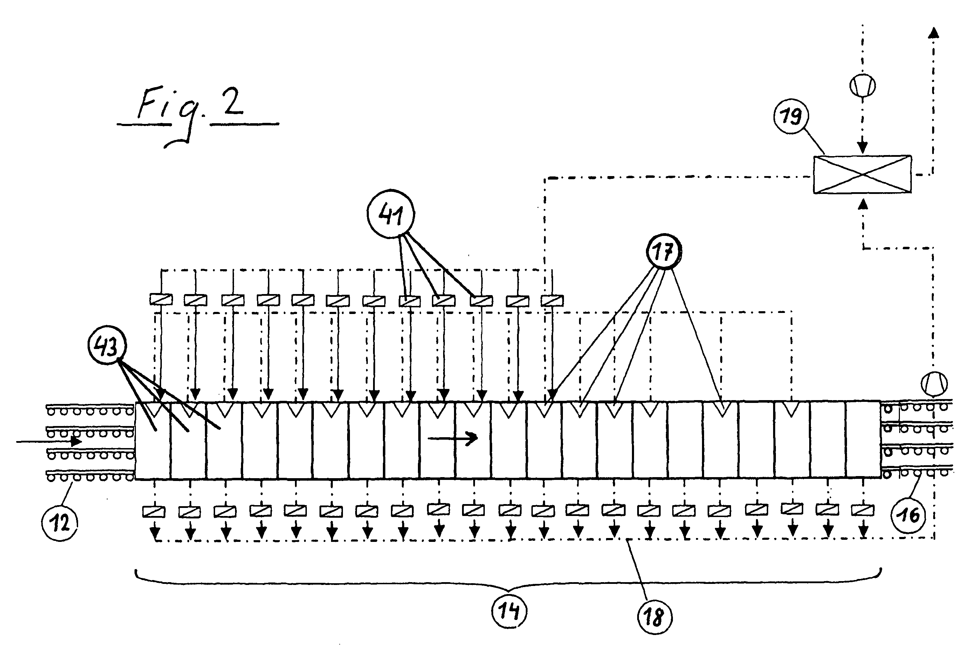

Fig. 2 zeigt beispielhaft ein Funktionsschema eines gattungsgemäßen konventionellen Trockners
Auf der rechten Seite der Fig.2 ist eine Beschickungseinrichtung 12 zu erkennen, auf der das den Trockner durchlaufende Trocknungsgut, zum Beispiel eine Folge von Gipskartonplatten, angeliefert wird. Das Trockengut durchläuft dann eine Folge von Trocknerkammern 43 den Trocknungsbereichs 14 um zuletzt den Trockner über eine Entnahmevorrichtung 16 zu verlassen.

Dreiecke kennzeichnen die Beheizungsvorrichtungen 17 der einzelnen Kammern Die Abluft der einzelnen Kammern 43 wird in einer Sammelleitung 18 gesammelt. Da die Abluft auch Kammern entnommen wird, in denen mit sehr hohen Temperaturen getrocknet wird, z.B. 220 - 300 °C, ist die gesammelte Abluft noch sehr heiß, z.B. 150 - 250 °C.
Auch wenn, wie dargestellt die Abluft in einem Wärmetauscher 19 zur Prozesslufterwärmung verwendet wird, so wird dabei hauptsächlich die sogenannte fühlbare Wärme übertragen. Die im Wasserdampf verborgene Verdampfungswärme wird so kaum oder gar nicht genutzt. Ein niedriger Energieverbrauch im Sinne der Erfindung kann nicht erreicht werden.

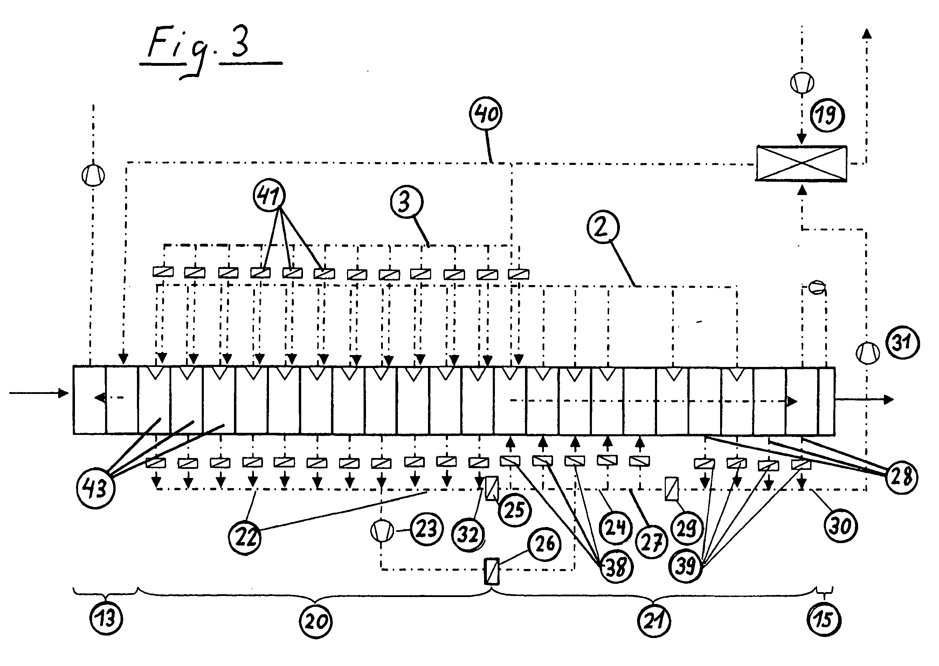

Fig. 3 zeigt ein Funktionsschema des erfindungsgemäßen Trockners. Die Beschickungseinrichtungen 12 und Entnahmevorrichtung16 sind hier aus Gründen der Übersicht nicht dargestellt. Im Vorzonenbereich 13 werden die Platten mit Hilfe von im Wärmetauscher 19 erwärmter Frischluft durch die Frischluftleitung 40 vorgewärmt. Dies senkt den Energieverbrauch .
Die Platten durchqueren anschließend den Haupttrocknungsstufe 20, wobei die Umluft Temperaturen von 150 °C - 350 °C vor dem Kontakt mit den Platten und 120 °C - 300 °C nach dem Kontakt mit den Platten aufweist. Die Feuchte der Umluft in dieser Stufe beträgt je nach Kammer zwischen 150 g/kg bis 850 g/kg.
Die Endtrocknung findet in der Endtrocknungsstufe 21 statt. Der Dichtbereich 15 , vermindert vorteilhaft den unerwünschten Austritt von Trocknungsluft über den Trockneraustritt.
Mit den in die einzelnen Kammern 43 hineinragenden Pfeilen sind die Beheizungsvorrichtungen 17 der einzelnen Trocknungskammern 43 dargestellt. Erkennbar ist, dass nicht alle Kammern der Endtrocknungsstufe 21 eine Beheizungsvorrichtung 17 aufweisen. Es ist vorgesehen, dass diese im erfindungsgemäßen Betrieb gar nicht oder mit geringster Leistung zur Regelung verwendet werden. Die Leitungen für Mischluft 3 und Verbrennungsluft 2 sind ebenfalls dargestellt.
Erfindungsgemäß soll möglichst wenig Mischluft 3 eingesetzt werden, im Idealfall sind die Mischluftklappen 41 geschlossen.

Sinn der Aufteilung des Trocknungsbereiches in eine Haupttrocknungsstufe 20 und eine Endtrocknungsstufe 21 ist die Absicht, die Abluft der einzelnen Kammern 43 der Haupttrocknungsstufe 20 zu sammeln und an der Stelle in die Endtrocknungsstufe21 einzuleiten, an der die hohe Temperatur der gesammelten Abluft, vorgesehen sind 150 °C bis 250 °C bei einer Feuchte 200 - 800 g/kg, sinnvoll und zulässig ist, die Energie der heißen Luft durch eine geschickte Luftführung für die Trocknung in der Endtrocknungsstufe 21 zu nutzen und schließlich die Luft bei einer deutlich tieferen Temperatur, vorgesehen sind 80 °C - 130 °C bei einer Feuchte von 250 - 850 g/kg, an der Stelle zu entfernen, wo eine derartig niedrige Temperatur ohnehin gefordert ist.
Je nach Trockengut werden zwischen 10 und 30 % der Trocknungsleistung in der Endtrocknungsstufe 21 erbracht werden.
Da viele Trocknungsgüter, insbesondere Gipsplatten, gegen Ende der Trocknung bei niedrigen Temperaturen getrocknet werden müssen, um eine Übertrocknung zu verhindern, die zur Schädigung des Trockengutes führt.
Die Fig.3 zeigt wie die Abluft der Haupttrocknungsstufe 20 in der Sammelleitung 22 gesammelt wird, um dann von einem Ventilator 23 in die Verteilleitung 24 zur Endtrocknungsstufe 21 geleitet zu werden. Dabei ist die Bypassregelklappe 25 geschlossen, die Regelklappe A 26 steht offen. Die Luft wird über mehrere Zuleitungen 27 in die Endtrocknungsstufe 21 geleitet. Dabei werden die Klappen 38 der Zuleitungen so geregelt, dass die meiste Luft in die ersten Kammern der Endtrocknungszone 21 eingeleitet wird. Dazu werden die in der Darstellung links angeordneten Zuleitungsklappen 38 möglichst weit geöffnet, die rechten Ableitungsregelklappen 39 möglichst gedrosselt. Es ist vorgesehen, dass 1 oder mehrere der Kammern im Vorderen Bereich der Endtrocknungsstufe21 mit solchen Zuleitungen27 ausgerüstet werden. Die Luft wird dann über 1 oder mehrere Abluftleitungen 28 aus dem hinteren Bereich der Endtrocknungsstufe 21 abgeführt. Die Regelklappe 29 zwischen der Verteilleitung 24 und der Sammelleitung 30 ist im erfindungsgemäßen Betrieb geschlossen, oder gedrosselt.
Dabei werden die Klappen 39 der Abluftleitungen 28 so eingestellt, dass der größte Anteil der Abluft in den letzten Kammern 43 der Endtrocknungsstufe 21 abgeleitet wird. Dazu werden die in der Darstellung rechts angeordneten Abluftklappen39 weit geöffnet, die linken Zuluftklappen 38 gedrosselt. Es ist vorgesehen, dass ein oder mehrere der Kammern 43 der Endtrocknungsstufe 21 mit solchen Ableitungen 28 ausgerüstet werden. Über eine Sammelleitung 30 befördert ein Abluftventilator 31 die Luft über einen Wärmetauscher 19 zur Frischluftvorwärmung ins Freie. Aufgrund der niedrigen Ablufteintrittstemperatur in den Tauscher stammt die Energie zur Frischlufterwärmung nun zu einem erheblichen Teil aus der Kondensationswärme der Abluft.
Die Bypassleitung 32 wird verwendet, wenn Luft direkt in den Tauscher abgeleitet werden muss. Hierzu wird die Bypassregelklappe 25 geöffnet, die Regelklappe A 26 geschlossen und die Regelklappe B 29 geöffnet. Der Ventilator 23 wird abgestellt. Dies ist zum Beispiel der Fall bei außergewöhnlichen Betriebszuständen (An- und Abfahren der Anlage, Produktwechseln). Der Trockner lässt sich so ,für diese Zustände ,vorteilhafter regeln

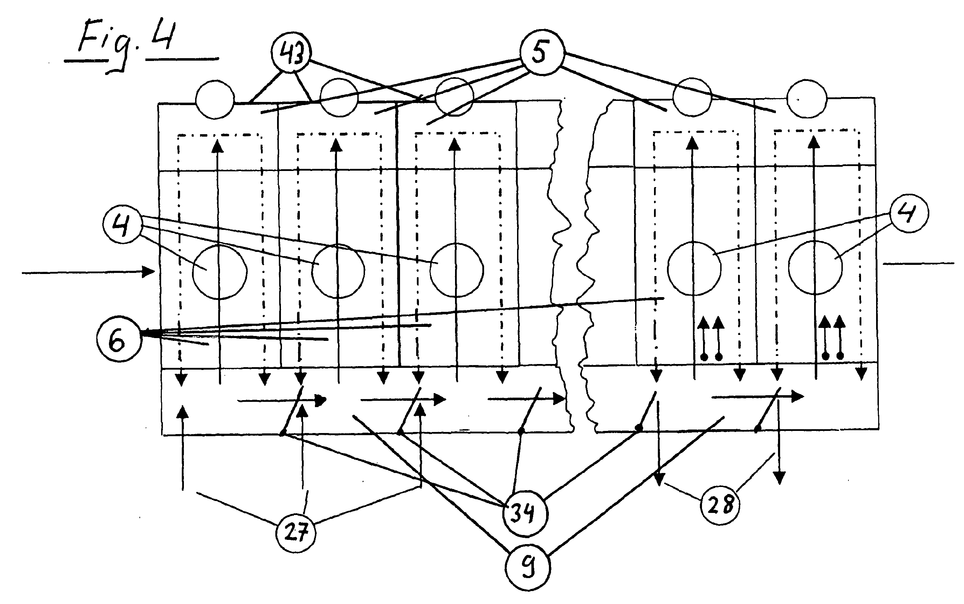

Fig. 4 zeigt eine Prinzipskizze zur Luftführung innerhalb des erfindungsgemäßen Trockners.
Von der Luftzuleitung 27 gelangt die Luft in die Saugraum 9 und vermischt sich dort mit der dort befindlichen Umluft. Der überschüssige Teil der Luft, in der Menge im wesendlichen der Summe aus zugeleiteter Abluft, und dem verdampften Wasser entsprechend, wird vom Saugraum der benachbarten, in Transportrichtung gelegenen Trocknungskammer 43 angesaugt. Die Seitenwände der Saugraums, sowie die Seitenwände des Bereiches des Overhead 11 bis zum Umluftventilator 4, jeweils zu den benachbarten Trochnungskammern 43 hin, sind über die Wandklappen 34 so eingestellt um einen möglichst effizienten Durchtritt dieser Luft zu ermöglichen. Die Umluft wird über den Umluftventilator 4 in den Druckraum 5 geleitet und von dort auf die einzelnen Düsenkästen verteilt. Die Seitenwände des Druckraumes 5 sind geschlossen.
Im eigentlichen Trocknungsraum 6 werden die Seitenbegrenzungsflächen der Kammern so abgedichtet, dass im wesendlichen nur die Platten durchtreten können. Erfindungsgemäß werden die Durchtrittsöffnungen , hier aus Gründen der Übersicht nicht dargestellt ,einstellbar und oder regelbar ausgeführt, je nach Stärke der durchgehenden Platten des Trocknungsgutes plus Toleranz. Dies ist erforderlich, um eine gleichmäßige Trocknung über die Breite der Platten zu erreichen.
Die durch die Trocknung abgekühlte Luft und der Wasserdampf strömen an der Platte vorbei wieder in den Saugraum 9. Dort schließt sich der Umluftkreis. Dieser Vorgang wiederholt sich in den folgenden Trocknungskammern mit dem Unterschied, dass hier auch die Trocknungsluft der vorhergehenden Kammern eingemischt wird.

Die Ableitung 28 funktioniert analog. Luft wird hier dem Saugraum 9 entnommen, ein weiterer Teil der Trocknungsluft in die nachfolgende Kammer43 eingesaugt. In der letzten Kammer43 wird die Trocknungsluft abgeleitet.

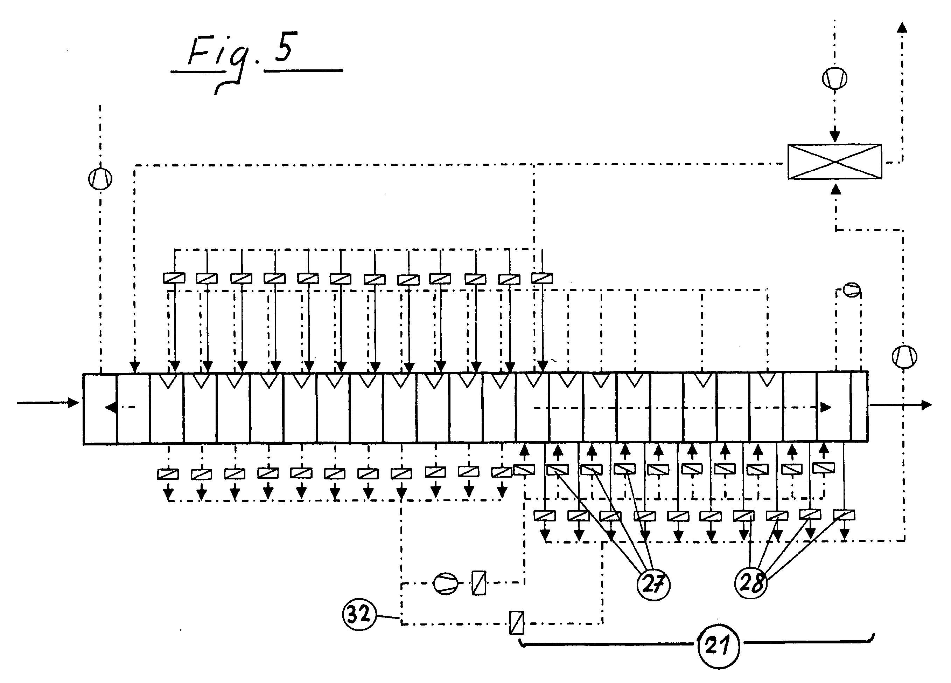

Fig. 5 zeigt beispielhaft eine vorteilhafte Abwandlung des erfindungsgemäßen Trockners.
Hier verfügt jede Kammer43 über eine eigene Abluftzuleitung 27 und Abluftableitung 28. Diese Anordnung ist von Vorteil, wenn die zugeführte Abluftmenge so groß wird, das sich beim Eintritt in die Kammer43 der Endtrocknungsstufe 21 , sowie beim Durchtritt von Kammer zu Kammer zu große Druckverluste ergeben würden oder wenn das Temperaturprofil aus trocknungstechnischen Gründen so verschoben werden muss, das in der ersten Hälfte der Kammern43 der Endtrocknungsstufe 21 mit etwas niedrigeren, in der zweiten Hälfte der Kammern43 aber mit etwas höheren Temperaturen getrocknet werden soll, als es in Figur 3 der Fall ist. Erfindungsgemäß wird der Trockner so eingestellt, dass 60 - 100 % in der ersten Hälfte der Endtrocknungsstufe 21 eingeleitet wird und 60 - 100 % in der zweiten Hälfte der Endtrocknungsstufe 21 abgeleitet wird.
Auch diese Abwandlung beinhaltet eine Bypassleitung 32, mit der überschüssige Abluft direkt zum Wärmetauscher 19 abgeleitet werden kann. Dies ist der Fall bei außergewöhnlichen Betriebszuständen siehe Figur 3

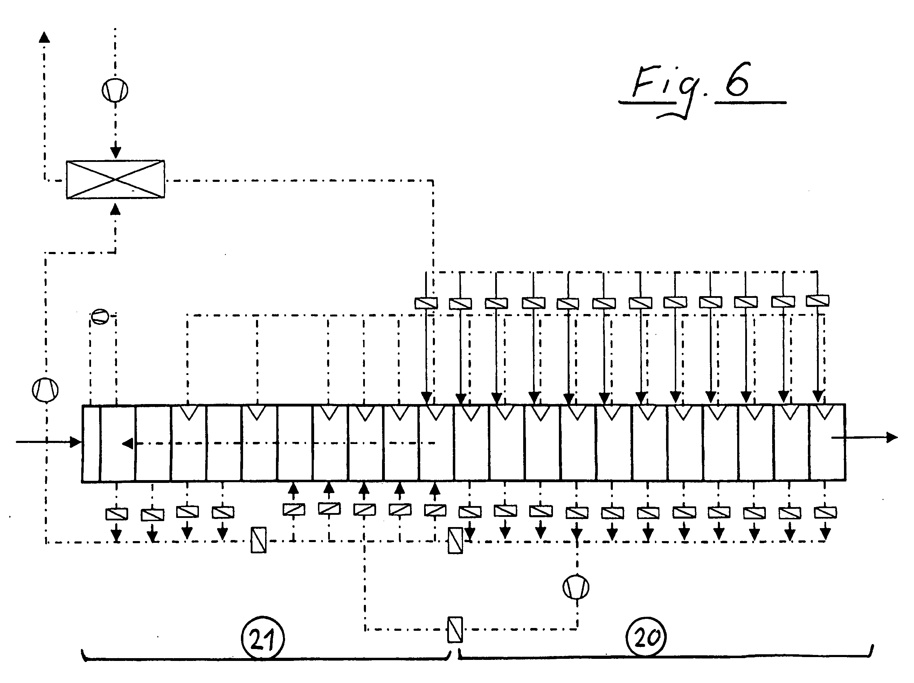

Fig. 6 zeigt beispielhaft eine weitere vorteilhafte Abwandlung des erfindungsgemäßen Trockners.
Bei manchen Trocknungsgütern, wie z.B. Deckenplatten ist es möglich und sinnvoll, gegen Ende der Trocknung mit hohen Temperaturen, z.B. 150 -250 °C zu trocknen. Dies ist z.B. der Fall, wenn das Gut durch die hohen Temperaturen nicht geschädigt wird und wenn das Gut einen geringen Wärmeleitwert besitzt.
Die Luft kann dann im hinteren Bereich auch nicht bei tiefen Temperaturen abgeleitet werden, entsprechend kann auch keine Abluft zur Endtrocknung genutzt werden.
Wie die Abbildung zeigt, gelingt es durch Spiegeln der Anordnung der Endtrocknungsstufe 21 und der Haupttrocknungsstufe 20 den Trockner so abzuwandeln, dass die Abluft aus der jetzt nachgeschalteter Haupttrockenstufe 20 in der jetzt vorgeschalteten Endtrocknungsstufe 21 des Trockners zur Erwärmung des Gutes und zur Vortrocknung verwendet werden kann. Die Vorzone 13 macht für die Nachtrocknung keinen Sinn mehr und entfällt.
Der Durchtritt von Abluft von Kammer 43 zu Kammer 43 im Saugraum 9 erfolgt entgegen der Transportrichtung.

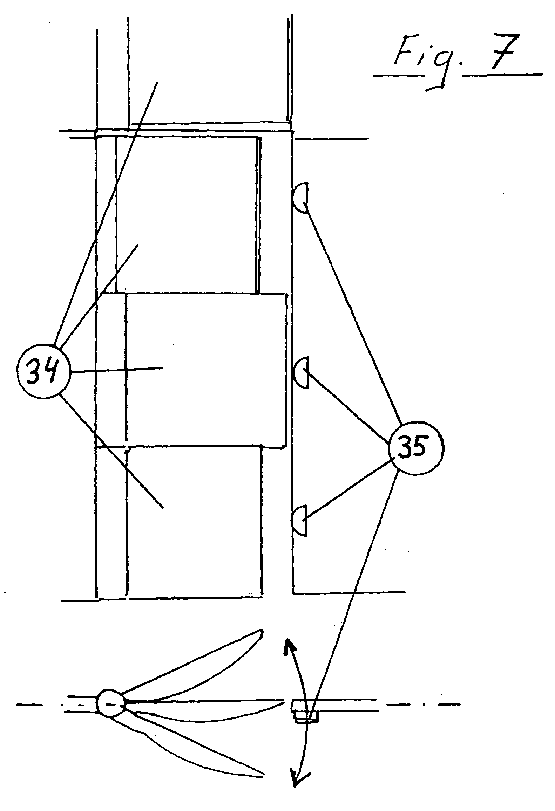

Fig. 7. zeigt eine Detail - Darstellung der Wandklappen.
In der Beschreibung der Fig.1 wurde darauf hingewiesen, dass sich die Strömungsverhältnisse in der Endtrocknungsstufe 21 nahezu beliebig verstellen und in Echtzeit an sich ändernde Betriebsparameter anpassen lassen. Eine weitere Möglichkeit diese Strömungsverhältnisse gezielt zu beeinflussen besteht in einer besonderen Ausgestaltung der Wandklappen 34. So kann durch eine Veränderung des Profils bzw. des Querschnitts in der Art eines Tragflügelprofils einer oder mehrerer Wandktappen 34 eine direkte Einflussnahme auf die Strömungsgeschwindigkeit der vorbei streichenden Luft erreicht werden. Eine aerodynamische Entsprechung stellen die Druckverhältnisse auf der Unterseite bzw. der Oberseite eines Tragflügels im Flugzeugbau dar. Mittels entsprechender Strömungssensoren 35 können somit weitere Steuerungsparameter, wie die Geschwindigkeit der strömenden Luft, sofort erfasst und einem Steuerungsprogramm zugeführt werden.
Die komplexe Steuerung der beschriebenen Bewegungsabläufe erfordert ein spezielles Steuerprogramm.

### Bezugszeichenliste

- 1: Brenner
- 2: Verbrennungsluftleitung
- 3: Mischluftleitung
- 4: Umluftventilator
- 5: Druckraum
- 6: Trocknungsraum
- 7: Düsenkästen
- 8: Platten
- 9: Saugraum
- 10: Abluftableitung
- 11: Overhead
- 12: Beschickungseinrichtung
- 13: Vorzonenbereich
- 14: Trocknungsbereich
- 15: Dichtbereich
- 16: Entnahmevorrichtung
- 17: Beheizungsvorrichtungen
- 18: Abluftsammelleitung
- 19: Wärmetauscher
- 20: Haupttrocknungsstufe A
- 21: Endtrocknungsstufe B 22 Sammelleitung A
- 23: Ventilator
- 24: Verteilleitung
- 25: Bypassregelklappe
- 26: Regelklappe A
- 27: Zuluftleitung
- 28: Abluftleitung
- 29: Regelklappe B
- 30: Sammelleitung B
- 31: Abluftventilator
- 32: Bypassleitung
- 33: Transporteinrichtung
- 34: Wandklappen
- 35: Strömungssensoren
- 36: Lochdüsen
- 37: Wandklappensteuerung
- 38: Zuluftregelklappen
- 39: Abluftregelklappen
- 40: Frischluftleitung
- 41: Mischluftregelklappen
- 43: Trockrungskammer

## Patentansprüche

1. Verfahren zum Trocknen von Platten, die in Etagen durch eine in Trocknungskammern aufgeteilte Vorrichtung geführt werden, bei dem die Platten in einer Haupttrocknungsstufe (20) und einer Endtrocknungsstufe (21) mittels Prallstrahlbelüftung mit der Trocknungsluft in Kontakt gebracht werden und wobei die Prallstrahlbelüftung mittels querbelüfteter Düsenkästen gewährleistet wird, wobei
a) die Abluft der Haupttrocknungsstufe (20) zur Beheizung der Endtrocknungsstufe (21) in einen Druckraum (5) einer oder mehrerer Trocknungskammern (43) in der ersten Hälfte der Endtrocknungsstufe (21) eingemischt wird und
b) ein Teil der so erhaltenen Mischluft im Umluftbetrieb zum Trocknen in der Trocknungskammer (43) verwendet wird und
c) ein weiterer Teil der Mischluft in den Saugraum (9) der jeweils nachfolgenden Trocknungskammer eingeleitet wird und
d) die Abluft die Endtrocknungsstufe (21) in dieser Weise insgesamt durchwandert,
e) die Abluft aus einer oder mehreren Trocknungskammern (43) in der zweiten Hälfte der Endtrocknungsstufe (21) auf einem tieferen Temperaturniveau ausgeleitet wird, wobei in der Haupttrocknungsstufe (20)
f) die Umluft auf 150 bis 350 °C erwärmt wird,
g) die Umluft nach Kontakt mit den Platten auf 120 bis 300 °C abkühlt,
h) die Umluft eine Feuchte von 150 g/kg bis 850 g/kg aufweist,
i) ein Teil der Umluft kammerweise entnommen, gesammelt und als Abluft der Endtrocknungsstufe (21) zugeführt wird und in der Endtrocknungsstufe (21)
j) die Abluft der Haupttrocknungsstufe (20) mit einer Temperatur von 150 °C bis 250 °C und einer Feuchte von 200 bis 800 g/kg zugeführt wird,
k) die Abluft der Endtrocknungsstufe (21) mit einer Temperatur von 80 °C bis 130 °C und einer Feuchte von 250 bis 850 kg/kg abgeführt wird, und
l) die Trocknungsleistung der Endtrocknungsstufe (21) 10 % bis 30 % der Trocknungsleistung der Haupttrocknungsstufe (20) beträgt.

2. Verfahren nach Anspruch 1, **dadurch gekennzeichnet, dass**
a) die Abluft der Haupttrocknungsstufe (20) über den gesamten Bereich der Endtrocknungsstufe (21) den Trocknungskammern (43) zugemischt wird, wobei 60 bis 100 % der Luft in der ersten Hälfte der Stufe eingeleitet wird und
b) die Abluft der Endtrocknungsstufe (21) über den gesamten Bereich der Endtrocknungsstufe (21) den Trocknungskammern (43) entnommen wird, wobei 60 bis 100 % der Abluft in der zweiten Hälfte der Endtrocknungsstufe (21) aus einer oder mehreren Trocknungskammern (43) entnommen wird.

3. Vorrichtung zum Trocknen von Platten
mit einer Fördereinrichtung zum Fördern von in Etagen angeordneten Platten durch die Vorrichtung mit einer Haupttrocknungsstufe (20) und einer Endtrocknungsstufe (21)
a) mit jeweils mindestens zwei Trocknungskammern (43),
b) wobei jede Trocknungskammer quer zur Transportrichtung etagenweise angeordnete Düsenkästen aufweist,
c) mit in den Kammern (43) angeordneten Umluftkanälen mit Fördermitteln und Heizvorrichtungen für die Umluft, sowie Mitteln zum Zuführen von Zuluft und Mitteln zum Abführen von Abluft,
wobei
d) zwischen einer Sammelleitung A (22) der Haupttrocknungsstufe (20) und einer Verteilleitung (24) der Endtrocknungsstufe (21) eine Zufuhreinrichtung mit einem Fördermittel (23) angeordnet ist, welche Abluft von der Haupttrocknungsstufe (20) in die Endtrocknungsstufe (21) leitet,
e) eine einzelne oder mehrere, maximal aber die erste Hälfte der Trocknungskammern (43) der Endtrocknungsstufe (21) mit regelbaren Zufuhreinrichtungen ausgerüstet sind, mit welchen die Abluft von der Haupttrocknungsstufe (20) diesen zugeteilt wird,
f) eine einzelne oder mehrere, maximal aber die zweite Hälfte der Trocknungskammern (43) der Endtrocknungsstufe (21) mit regelbaren Abfuhrreinrichtungen ausgerüstet sind, mit welchen die Abluft von der Endtrocknungsstufe (21) diesen über eine Sammelleitung B (30) entnommen werden kann,
g) in der Endtrocknungsstufe (21) auf der Saugseite der Trocknungskammern (43) die Begrenzungsflächen zu den benachbarten Trocknungskammern (43) geöffnet sind,
h) die Sammelleitung A (22) mit der Verteilleitung (24) durch eine Bypassleitung (32) und eine Regelklappe A (25) verbunden sind und die Verteilleitung (24) mit der Sammelleitung B (30) mit einer Regelklappe B (29) miteinander verbunden sind.

4. Vorrichtung nach Anspruch 3 **gekennzeichnet dadurch, dass**
a) die Verteilleitung (24) die gesamte Endtrocknungsstufe (21) abdeckt und jede Kammer (43) über einen regelbaren Anschluss verfügt,
b) die Sammelleitung B (22) die gesamte Endtrocknungsstufe (21) abdeckt und jede Kammer (43) über einen regelbaren Anschluss verfügt.

## Claims

1. Method for drying sheets
which are guided in tiers through a device which is split into drying chambers, in which the sheets are brought into contact with the drying air in a main drying stage 20 and a final drying stage 21 by means of impingement jet aeration and wherein the impingement jet aeration is ensured by means of cross aerated nozzle boxes, wherein
a) the exhaust air of the main drying stage 20 is added to a pressure chamber 5 of one drying chamber, or of a plurality of drying chambers 43, in the first half of the final drying stage 21 for heating of the final drying stage 21 and
b) a portion of the mixing air thus obtained is used during circulating air mode for drying in the drying chamber 43 and
c) a further portion of the mixing air is introduced into the suction chamber 9 of the subsequent drying chamber in each case and
d) the exhaust air overall travels through the final drying stage 21 in this way,
e) the exhaust air from one drying chamber, or from a plurality of drying chambers 43, in the second half of the final drying stage 21 is discharged at a lower temperature level, wherein in the main drying stage 20
f) the circulating air is heated to 150 to 350°C,
g) the circulating air, after contact with the sheets, is cooled to 120 to 300°C,
h) the circulating air has a humidity of 150 g/kg to 850 g/kg,
i) a portion of the circulating air is extracted chamber-wise, collected and fed as exhaust air to the final drying stage 21,
and in the final drying stage 21
j) the exhaust air is fed to the main drying stage 20 at a temperature of 150°C to 250°C and with a humidity of 200 to 800 g/kg,
k) the exhaust air of the final drying stage 21 is discharged at a temperature of 80°C to 130°C and with a humidity of 250 to 850 kg/kg, and
l) the drying capacity of the final drying stage 21 is 10% to 30% of the drying capacity of the main drying stage 20.

2. Method according to Claim 1, **characterized in that**
a) the exhaust air of the main drying stage 20 is added to the drying chambers 43 over the entire region of the final drying stage 21, wherein 60 to 100% of the air is introduced in the first half of the stage and
b) the exhaust air of the final drying stage 21 is extracted from the drying chambers 43 over the entire region of the final drying stage 21, wherein 60 to 100% of the exhaust air is extracted in the second half of the final drying stage 21 from one drying chamber or from a plurality of drying chambers 43.

3. Device for drying sheets,
with a feed device for feeding sheets, arranged in tiers, through the device with a main drying stage 20 and a final drying stage 21
a) with at least two drying chambers 43 in each case,
b) wherein each drying chamber has nozzle boxes which are arranged in tiers transversely to the transporting direction,
c) with circulating air passages, arranged in the chambers 43, with feed means and heating devices for the circulating air, and also means for feeding feed air and means for discharging exhaust air,
wherein
d) a feed device having a feed means (23) is arranged between a collecting line A (22) of the main drying stage 20 and a distribution line (24) of the final drying stage 21 and directs exhaust air from the main drying stage 20 into the final drying stage 21,
e) a single drying chamber, or a plurality of drying chambers, but at most the first half of the drying chambers 43, of the final drying stage (21), is or are equipped with controllable feed devices, with which the exhaust air from the main drying stage 20 is apportioned to these,
f) a single drying chamber, or a plurality of drying chambers, but at most the second half of the drying chambers (43) of the final drying stage (21), is or are equipped with controllable discharge devices, with which the exhaust air from the final drying stage 21 can be extracted from these via a collecting line B (30),
g) in the final drying stage 21 on the suction side of the drying chambers 43, the boundary surfaces are open to the adjacent drying chambers 43,
h) the collecting line A 22 is connected to the distribution line 24 by means of a bypass line 32 and a control flap A 25, and the distribution line (24) and the collecting line B 30 are interconnected by a control flap B 29.

4. Device according to Claim 3, **characterized in that**
a) the distribution line (24) covers the entire final drying stage 21 and each chamber 43 has a controllable connection,
b) the collecting line B 22 covers the entire final drying stage 21 and each chamber 43 has a controllable connection.

## Revendications

1. Procédé de séchage de plaques, qui sont guidées dans des étages à travers un dispositif divisé en chambres de séchage, les plaques étant amenées en contact, dans un étage de séchage principal (20) et un étage de séchage final (21), avec l'air de séchage au moyen d'une ventilation à jet et la ventilation à jet étant assurée par des caissons à buses à ventilation transversale,
a) l'air sortant de l'étage de séchage principal (20), pour le chauffage de l'étage de séchage final (21), étant incorporé par mélange dans un espace de pression (5) d'une ou de plusieurs chambres de séchage (43) dans la première moitié de l'étage de séchage final (21) et
b) une partie de l'air de mélange ainsi obtenu étant utilisée en mode de circulation d'air pour effectuer le séchage dans la chambre de séchage (43) et
c) une partie supplémentaire de l'air de mélange étant introduite dans l'espace d'aspiration (9) de la chambre de séchage respective suivante et
d) l'air sortant traversant de cette manière complètement l'étage de séchage final (21),
e) l'air sortant étant guidé hors d'une ou de plusieurs chambres de séchage (43) dans la deuxième moitié de l'étage de séchage final (21) à un niveau de température plus bas,
dans l'étage de séchage principal (20)
f) l'air de circulation étant chauffé à 150 à 350°C,
g) l'air de circulation étant refroidi à 120 à 300°C après contact avec les plaques,
h) l'air de circulation présentant une humidité de 150 g/kg à 850 g/kg,
i) une partie de l'air de circulation étant prélevée dans les chambres, recueillie et acheminée sous forme d'air sortant à l'étage de séchage final (21) et
dans l'étage de séchage final (21)
j) l'air sortant de l'étage de séchage final (20) étant acheminé avec une température de 150°C à 250°C et une humidité de 200 à 800 g/kg,
k) l'air sortant de l'étage de séchage final (21) étant évacué à une température de 80°C à 130°C et à une humidité de 250 à 850 kg/kg, et
l) la puissance de séchage de l'étage de séchage final (21) étant de 10 % à 30 % de la puissance de séchage de l'étage de séchage principal (20).

2. Procédé selon la revendication 1, **caractérisé en ce que**
a) l'air sortant de l'étage de séchage principal (20) est ajouté par mélange par le biais de toute la région de l'étage de séchage final (21) aux chambres de séchage (43), 60 à 100 % de l'air étant introduits dans la première moitié de l'étage et
b) l'air sortant de l'étage de séchage final (21) est prélevé des chambres de séchage (43) par le biais de toute la région de l'étage de séchage final (21), 60 à 100 % de l'air sortant étant prélevés dans la deuxième moitié de l'étage de séchage final (21) hors d'une ou de plusieurs chambres de séchage (43).

3. Dispositif de séchage de plaques comprenant un dispositif de transport pour transporter des plaques disposées dans des étages à travers le dispositif, comprenant un étage de séchage principal (20) et un étage de séchage final (21),
a) avec à chaque fois au moins deux chambres de séchage (43),
b) chaque chambre de séchage présentant, transversalement à la direction de transport, des caissons de buses disposés par étage,
c) avec des canaux de circulation d'air disposés dans les chambres (43) avec des moyens de transport et des dispositifs de chauffage pour l'air de circulation, ainsi que des moyens pour acheminer l'air entrant et des moyens pour évacuer l'air sortant,
d) entre une conduite de collecte A (22) de l'étage de séchage principal (20) et une conduite de distribution (24) de l'étage de séchage final (21) étant disposé un dispositif d'alimentation avec un moyen de transport (23) qui conduit l'air sortant de l'étage de séchage principal (20) à l'étage de séchage final (21),
e) une chambre de séchage unique ou plusieurs chambres de séchage, au maximum toutefois la première moitié des chambres de séchage (43) de l'étage de séchage final (21), étant équipées de dispositifs d'alimentation réglables, avec lesquels l'air sortant de l'étage de séchage principal (20) est alloué à celles-ci,
f) une chambre de séchage unique ou plusieurs chambres de séchage, au maximum toutefois la deuxième moitié des chambres de séchage (43) de l'étage de séchage final (21), étant équipées de dispositifs d'évacuation réglables avec lesquels l'air sortant de l'étage de séchage final (21) peut être prélevé de celles-ci par le biais d'une conduite de collecte B (30),
g) dans l'étage de séchage final (21) du côté d'aspiration des chambres de séchage (43), les surfaces de limitation étant ouvertes vers les chambres de séchage adjacentes (43),
h) la conduite de collecte A (22) étant connectée à la conduite de distribution (24) par une conduite de dérivation (32) et un clapet de régulation A (25) et la conduite de distribution (24) et la conduite de collecte B (30) étant connectées l'une à l'autre par un clapet de régulation B (29).

4. Dispositif selon la revendication 3, **caractérisé en ce que**
a) la conduite de distribution (24) recouvre l'ensemble de l'étage de séchage final (21) et chaque chambre (43) dispose d'un raccord réglable,
b) la conduite de collecte B (22) recouvre l'ensemble de l'étage de séchage final (21) et chaque chambre (43) dispose d'un raccord réglable.
